# EUROPÄISCHE PATENTSCHRIFT

(11) **EP 1 600 664 B1**
(45) Veröffentlichungstag und Bekanntmachung des Hinweises auf die Patenterteilung: **28.04.2010**
(21) Anmeldenummer: 04012703.7
(22) Anmeldetag: 28.05.2004
(51) Int. Cl.: F16H 9/10, F16H 55/54

(54) **Stufenloses Getriebe sowie Verwendung und Betriebsverfahren dafür**
Continuously variable transmission, application and operation method
Transmission à variation continue et procédé de fonctionnement

(43) Veröffentlichungstag der Anmeldung: 30.11.2005
(73) Patentinhaber: Baumann, Albrecht, D-97956 Wenkheim (DE)
(72) Erfinder: Baumann, Albrecht, D-97956 Wenkheim (DE)
(74) Vertreter: Küchler, Stefan

(56) Entgegenhaltungen:
- WO-A-98/11364
- DE-A- 2 412 664
- DE-A- 3 501 663
- US-A- 3 374 691
- US-A- 3 913 410

## Beschreibung

Die Erfindung richtet sich auf ein stufenloses Getriebe mit einem Tragkörper, wenigstens zwei peripheren Zahnrädern, die an dem Tragkörper oder an damit mechanisch gekoppelten Elementen derart gelagert sind, dass deren Drehachsen parallel zueinander orientiert sind, wobei die Abstände zwischen den Drehachsen der peripheren Zahnräder derart verstellbar sind, dass sie sich stets auf der Mantelfläche eines gedachten Zylinders befinden, wenigstens einer die peripheren Zahnräder außen umgebenden Reihe von Zahneingriffselementen, mit denen jeweils wenigstens eines der peripheren Zahnräder kämmt, und einem Drehkörper, vorzugsweise koaxial zu der Rotationsachse des gedachten Zylinders, der gegenüber dem Tragkörper drehbar ist und dessen Drehbewegung mit der Drehbewegung der peripheren Zahnräder gekoppelt ist, ferner mit einer Antriebswelle, die mit dem Tragkörper oder mit dem Drehkörper gekoppelt ist, mit einer Abtriebswelle, die mit dem jeweils anderen Element, nämlich mit dem Drehkörper oder mit dem Tragkörper gekoppelt ist, und mit einem Steuerelement zur Einstellung des Übersetzungsverhältnisses, das mit der Abstandsverstellung eines oder mehrerer, peripherer Zahnräder gekoppelt ist.

Mechanische stufenlose Getriebe sind bekannt, insbesondere mit einem ebenen Reibring, der zwei Paare von Kegelrädern umgibt, deren Spitzen aufeinander zu weisen und in axialer Richtung gegeneinander verstellbar sind. Der Abstände zwischen den beiden Kegelrädern werden bei den beiden Paaren gegensinnig verstellt, so dass der Reibring stets mit beiden Kegelradpaaren reibschlüssig gekoppelt ist, dort jedoch unterschiedliche Umfangslängen vorfindet. Ein solches Getriebe ist zwar prinzipiell stufenlos verstellbar, jedoch lassen sich damit keine beliebig großen Kräfte übertragen, weil der Reibschluß zum Durchschlupfen neigt.

Aus diesem Grunde wurde bereits angestrebt, mit einer formschlüssigen Kopplung zu arbeiten. So offenbart die WO 98/11364 eine offene Kette, deren beide Enden fixiert sind. An einem scheibenförmigen Träger befinden sich mindestens zwei radial verstellbare Zahnräder, die mit der festgehaltenen Kette kämmen, wenn sich der scheibenförmige Träger dreht. Dabei werden die peripheren Zahnräder in Drehung versetzt, und diese Drehung wird mittels Kardanwellen auf eine zentrale Achse übertragen. Die Kette umgibt die Achse des scheibenförmigen Trägers etwa entlang eines Halbkreises. Von wenigstens zwei Zahnrädern kämmt daher mindestens eines mit der Kette, im Übergangsbereich kämmen beide, damit kein Durchrutschen möglich ist. Da die wenigstens zwei Zahnräder über die Kardanwellen und die zentrale Achse miteinander gekoppelt sind, rotieren sie stets mit der selben Geschwindigkeit. Dies verursacht jedoch beim gleichzeitigen Eingriff mehrerer Zahnräder mit der Kette Probleme, nämlich während der Verstellung des radialen Abstandes dieser Zahnräder von der Drehachse. Da sie keiner Relativverdrehung fähig sind, reduziert bzw. erweitert sich dabei der Abstand zwischen ihren Zähnen, und die darin eingehakte Kette muß reißen.

Im Hinblick auf diesen Nachteil bringt auch die Lehre gemäß der DE 35 01 663 keine Verbesserung. Bei diesem Versuch zur Schaffung eines stufenlosen Getriebes mit formschlüssigen Eingriff wird ein Getrieberad mit veränderbarem wirksamem Radius verwendet, das mit einer Kette in Eingriff bringbar ist. Das Getrieberad ist als scheibenförmiger Träger realisiert mit mehreren exzentrischen Zahnrädern, die an dem scheibenförmigen Träger radial zu dessen Drehachse verstellbar sind, insbesondere mittels ein- und ausschwenkbaren Hebeln. Jedes der exzentrischen Zahnräder ist in einer Drehrichtung frei drehbar gelagert, in entgegengesetzter Drehrichtung jedoch nicht frei drehbar. Dieses Getrieberad ist über die Kette mit einem anderen Getrieberad drehfest gekoppelt, wobei die Kette unabhängig von dem wirksamen Radius des Getrieberades durch eine Mechanik gespannt wird. Zwar ist bei den hieraus vorbekannten Getrieberädern eine gegenseitige Relativverdrehung möglich, allerdings nur in einer Drehrichtung. Deshalb müssen bei einer Verstellung des wirksamen Radius alle Räder bis auf eines entgegen der Kraftübertragungsrichtung verschwenkt werden, können also keine Kraft übertragen. Dies führt dazu, dass die gesamte Kraft über ein einziges Rad zu übertragen ist. Deshalb muß jedes einzelne Zahnrad für die maximale Kraftübertragung ausgelegt sein. Außerdem ist bei dem vorgenannten Getriebe keine Bremswirkung möglich und daher auch keine Drehrichtungsumkehr.

Die gattungsmäßige US-A 3,913,410 offenbart ein stufenlos verstellbares Getriebe mit zwei umlaufenden Ketten, die sich in bzw. entlang von parallelen, aber gegeneinander versetzten Ebenen bewegen. Diese Ketten umschlingen einerseits je eines von zwei zueinander konzentrischen Zahnrädern, welche mit einer gemeinsamen Achse, bspw. der Antriebsachse, gekoppelt sind. Andererseits verlaufen sie zwischen zwei Paaren von jeweils zueinander parallelen Kreisscheiben, von denen jeweils eine mit einer anderen gemeinsamen Achse, bspw. der Abtriebsachse, drehfest verbunden ist. Während diese drehfest mit einer gemeinsamen Achse verbundenen Kreisscheiben mehrere, bspw. sechs, radial verlaufende Schlitze aufweisen, haben die jeweils anderen Kreisscheiben der beiden Paare eine gleiche Anzahl schräg verlaufender Schlitze. Durch eine Relatiwerdrehung der beiden Kreisscheiben eines Scheibenpaars wandern daher die Schnittpunkte der Schlitze entweder nach innen oder nach außen. In diesen Schnittpunkten ist je ein Zahnrad gelagert. Die beiden Kreisscheiben mit den radialen Schlitzen sind derart mit der gemeinsamen Achse verbunden, dass jeweils zwei dieser radialen Schlitze miteinander fluchten; außerdem werden die Schnittpunkte der sich überdeckenden Schlitze an beiden Kreisscheibenpaaren gleichermaßen nach radial innen oder außen verstellt; daher sind auch die Drehachsen je zweier, an unterschiedlichen Kreisscheibenpaaren gelagerter Zahnräder stets koaxial zueinander, und jeweils eben die zwei zueinander konzentrischen Zahnräder sind über je ein Differential miteinander gekoppelt. Dadurch können sich die jeweils über ein Differential miteinander gekoppelten Zahnräder gegensinnig drehen. Zur Verstellung der Übersetzung werden die Zahnräder allesamt radial verstellt. Dabei wird die frei werdende Kettenlänge von je einer Spanneinrichtung pro Kette aufgenommen. Während sich die Spanneinrichtung der einen Kette in deren Obertrum befindet, liegt die andere in dem betreffenden Untertrum. Damit werden den Zahnrädern der beiden Kreisscheibenpaare unterschiedliche Relativdrehungen aufgezwungen, weshalb dort jeweils Differentiale vorgesehen sind. Bei dieser Anordnung sind jedoch stets zwei zueinander parallele Ketten, zwei Spanneinrichtungen, zwei starr miteinander verbundene Kreisscheiben und zwei demgegenüber bewegliche Kreisscheiben erforderlich, was einen sehr großen Konstruktionsaufwand mit sich bringt und ein solches Getriebe extrem teuer macht.

Daraus folgt das die Erfindung initiierende Problem, ein mechanisches, stufenloses Getriebe mit formschlüssigem Eingriff derart auszubilden, dass gleichzeitig mehrere exzentrisch zu einer Symmetrieachse gelagerte Zahnräder mit einer Kette od. dgl. in Eingriff stehen und Kräfte übertragen können, deren Abstand zu der Symmetrieachse veränderbar ist, ohne dass deren Kraftschluß mit einem Träger für die peripheren Zahnräder oder einer mit diesen gekoppelten, gemeinsamen Welle des Getriebes aufgehoben werden muß, wobei außerdem der Konstruktionsaufwand so weit als möglich reduziert sein soll.

Die Lösung dieses Problems gelingt dadurch, dass die Drehkopplung zwischen den peripheren Zahnrädern und dem Drehkörper mittels eines oder mehrerer Differentiale, d.h., Ausgleichs- bzw. Differentialgetriebe, erfolgt, so dass eine asynchrone Drehung der peripheren Zahnräder möglich ist.

Dadurch wird der Kraftschluß nicht aufgehoben, und es können mehrere oder sogar alle peripheren Zahnräder mit der Kette einerseits und miteinander bzw. mit einem Drehkörper andererseits in Eingriff bleiben, d.h., zur Kraftübertragung beitragen, während eine Verstellung des Getriebeübersetzungsverhältnisses vorgenommen wird. Dadurch kann die Kette den Tragkörper um mehr als 180° umgeben, und es können ständig alle Zahnräder einen etwa gleich großen Anteil der Gesamtkraft übertragen, so dass die einzelnen Zahnräder bzw. deren Lagerungen oder Verstellmechanismen nur für ein verringertes Drehmoment ausgelegt werden müssen. Dies leistet das erfindungsgemäße Ausgleichs- oder Verteilergetriebe, das gleichzeitig etwa gleichmäßige Kraftübertragungen sicherstellt, aber Relativverdrehungen der einzelnen Zahnräder gegeneinander ermöglicht. Dies ergibt sich daraus, dass alle peripheren Zahnräder gleichförmig verstellt werden, so dass auch die Differenzdrehzahlen zwischen jeweils benachbarten Zahnrädern gleich groß sein müssen.

Es hat sich als günstig erwiesen, dass der die peripheren Zahnräder tragende Körper einen punktsymmetrischen Aufbau hat. Jedem der peripheren Zahnräder ist ein Arm oder eine Verstellmechanik zugeordnet, und eine Drehung um 360°/n führt zu einer identischen Anordnung. Daher entspricht n der Anzahl der peripheren Zahnräder.

Es liegt im Rahmen der Erfindung, dass an dem Tragkörper Einrichtungen vorgesehen sind, um den Abstand der peripheren Zahnräder gegeneinander bzw. in Bezug auf eine zentrale Achse eines gedachten Zylinders zu verstellen. Damit wird das Übertragungsverhältnis des Getriebes eingestellt.

Eine erste Möglichkeit zur Realisierung der Radialverstellung bilden vorzugsweise radial in Bezug auf eine zentrale Achse eines gedachten Zylinders verlaufende Führungen, wobei sich an einem daran geführten Körper jeweils die Lagerung für je ein peripheres Zahnrad befindet. In diesem Fall kann eine Radialverstellung bspw. mittels radialer Spindeln erfolgen.

Andererseits können die Abstands-Verstelleinrichtungen um dezentrale Achsen verschwenkbare Hebel aufweisen, an denen sich jeweils die Lagerung für je ein peripheres Zahnrad befindet. Zwar ist solchenfalls der Radialbewegung bei einer Verstellung immer eine Tangentialbewegung überlagert; werden die Hebel jedoch alle synchron verstellt, so führen sie zu der gemeinsamen Achse symmetrische Tangentialbewegungen aus, und als Relativbewegung verbleibt die reine Radialkomponente.

U.a. aus dem zuvor genannten Grund müssen die Verstelleinrichtungen miteinander gekoppelt sein, so dass die Abstands-Verstellung aller peripheren Zahnräder gleichermaßen erfolgt. Dann sind auch die zu übertragenden Kräfte stets etwa gleich groß, und demzufolge kann bei der Getriebeauslegung mit diesem Standard-Belastungsfall gerechnet werden, wobei jedes Zahnrad nur einen Bruchteil von etwa 1 / n der Gesamtkraft übertragen muß.

Eine synchrone bzw. gleichmäßige Verstellung der miteinander gekoppelten Zahnräder wird bewirkt durch ein gemeinsames Steuerelement, das auf alle Verstelleinrichtungen gleichermaßen einwirkt. Dies kann ein Rad oder Zahnrad sein, das mit allen Verstell-Spindeln oder Verstell-Hebeln gekoppelt ist vorzugsweise über eine von außen zugängliche Betätigungseinrichtung beeinflußt werden kann.

Wenn wenigstens eine die peripheren Zahnräder außen umgebende Reihe von Zahneingriffselementen flexibel und/oder verstellbar ist, so ist der Eingriff mit wenigstens einem peripheren Zahnrad unabhängig von dessen aktueller Abstands-Einstellung möglich. Dieser Eingriff wird sichergestellt, wenn außerdem eine die peripheren Zahnräder außen umgebende Reihe von Zahneingriffselementen in Richtung an die peripheren Zahnräder heran vorgespannnt ist.

Die obigen Konstruktionsvorschriften lassen sich mit geringem Aufwand befolgen, indem wenigstens eine die peripheren Zahnräder außen umgebende Reihe von Zahneingriffselementen durch eine Kette gebildet ist, deren Glieder mit den Zähnen wenigstens eines der peripheren Zahnräder kämmen, und die flexibel ist und sich demzufolge an die unterschiedlichen Radialabstände der peripheren Zahnräder anzupassen vermag.

Je nach Struktur des Getriebes mit feststehender oder umlaufender Kette kann dieselbe ein Spannelement aufweisen oder mit einem solchen gekoppelt sein, welches eine Zugspannung zwischen den Kettengliedern erzeugt und diese demzufolge an die peripheren Zahnräder heranzieht. Eine geschlossene Kette könnte dabei die getriebene Welle umlaufen; solchenfalls könnte zwecks Spannung der Kette der Abstand zu einem getriebenen Zahnrad verändert werden, und/oder ein die synchrone Verstellung der peripheren Zahnräder beeinflussendes Koppelelement könnte durch ein Federelement derart vorgespannt sein, dass die Zahnräder nach außen gedrückt werden. Es ist auch denkbar, zwei erfindungsgemäße Getriebeeinheiten über dieselbe, umlaufenden Kette miteinander zu koppeln und diese Getriebe sodann jeweils gegensinnig zu verstellen, so dass sich der Achsabstand der peripheren Zahnräder bei einer Getriebeeinheit erhöht und bei der anderen in entsprechendem Umfang gleichzeitig reduziert, so dass die Kette stets gespannt bleibt.

Dieser Erfindungsgedanke läßt sich dahingehend weiterbilden, dass der Gliederabschnitt der Kette nicht oder nur über ein Spannelement geschlossen ist. Dieser Fall betrifft vorzugsweise eine feststehende Kette, deren Enden sich außerhalb des Eingriffsbereichs der peripheren Zahnräder befinden, so dass dort ein oder mehrere Spannelemente, bspw. Zugfedern, angebracht werden können.

Eine zwischen Tragkörper und (zentralem) Drehkörper angeordnete Drehlagerung erlaubt eine Relativverdrehung zwischen diesen Körpern, wobei die Kopplung durch die verstellbaren Zahnräder beinflußbar ist. Diese Körper können dann als Ein- und Ausgangswellen des erfindungsgemäßen Getriebes dienen.

Die Erfindung sieht weiterhin vor, dass ein oder mehrere Differentiale sich an dem (zentralen) Drehkörper, insbesondere auf einer zentralen Drehachse, befinden. Dort werden alle Drehbewegungen der peripheren Zahnräder sternförmig zusammengeführt, so dass das Differentialgetriebe auf kleinstem Raum realisiert werden kann.

Um mehr als zwei Zahnräder miteinander zu koppeln, werden mehrere Differentiale oder Differential-Einheiten in Richtung der Rotationsachse des (zentralen) Drehkörpers hintereinander angeordnet und miteinander gekoppelt. Vorzugsweise ist jedes Zahnrad mit ein oder zwei anderen und/oder mit einer zentralen Drehachse derart gekoppelt, dass seine Drehbewegung die anderen beeinflußt oder von diesen beeinflußt wird. Dadurch kann kein Leerlauf entstehen, der zu undefinierten Drehzahlen eines Zahnrades führen könnte, welches sich gerade nicht in kämmendem Eingriff mit der Kette befindet. Somit ist sichergestellt, dass eine wirkliche Stufenlosigkeit gegeben ist, d.h., völlig unabhängig von einer beliebigen Zwischenstellung des Getriebes ein mit der Kette synchroner Wiedereingriff eines peripheren Zahnrades erfolgt.

Es liegt im Rahmen der Erfindung, dass der (zentrale) Drehkörper, insbesondere eine zentrale Drehachse, mit einer An- oder Abtriebswelle oder dem Gehäuse des stufenlosen Getriebes drehbewegungsmäßig gekoppelt ist. Die aus der Zusammenfassung der einzelnen Zahnrad-Drehbewegungen entstandene, einheitliche Drehbewegung läßt sich jedem der obigen drei Anschlußelementen des erfindungsgemäßen Getriebes zuordnen.

Mit großem Vorteil ist zwischen dem Tragkörper und/oder dem (zentralen) Drehkörper einerseits und der An- oder Abtriebswelle oder dem Gehäuse des stufenlosen Getriebes andererseits ein Planetengetriebe angeordnet. Ein vor- oder nachgeschaltetes Planetengetriebe erlaubt eine Anpassung der Drehzahlverhältnisse an bestimmte Anwendungsfälle, bspw. kann bei einer maximalen Drehzahl ein synchroner Betrieb realisiert werden, wo innere Getriebebewegungen und damit die innere Reibung minimiert sind.

Eine bevorzugte Beschaltung des Getriebes besteht darin, den Tragkörper mit einer Drehachse oder einem Hohlrad zu versehen, die/das mit einer An- oder Abtriebswelle oder dem Gehäuse des stufenlosen Getriebes drehbewegungsmäßig gekoppelt ist.

Ferner ist es möglich, mit dem Tragkörper oder der (zentralen) Drehachse das Hohlrad eines Planetengetriebes drehbewegungsmäßig zu koppeln oder zu integrieren, während das Sonnenrad des Planetengetriebes bevorzugt jeweils mit dem anderen Element (Tragkörper oder (zentrale) Drehachse) drehbewegungsmäßig gekoppelt oder integriert ist. An dem Planetenradträger steht sodann eine Differenzdrehzahl zur Verfügung. Diese kann an dem Getriebe abgegriffen werden, wenn der Planetenradträger des Planetengetriebes mit der An- oder Abtriebswelle oder dem Gehäuse des stufenlosen Getriebes drehbewegungsmäßig gekoppelt ist.

Bevorzugte Verwendungen des erfindungsgemäßen, stufenlosen Getriebes finden sich in Personen- und/oder Lastkraftfahrzeugen, landwirtschaftlichen Maschinen und/oder Fahrzeugen, Baumaschinen und/oder -fahrzeugen, Fördermaschinen und/oder -fahrzeugen, Aufzügen, Kraft- und Fahrrädern, etc. Bei diesen Anwendungen ist von großem Vorteil, dass mit dem erfindungsgemäßen Getriebe weitaus größere Kräfte übertragen werden können als bisher, weil stets mehrere Zahnräder etwa gleichmäßig an der Kraftübertragung beteiligt sind, vorzugsweise immer mindestens (n-1), wobei n die Anzahl aller peripheren Zahnräder ist.

Beim Betrieb des erfindungsgemäßen, stufenlosen Getriebes ist die angetriebene Welle des stufenlosen Getriebes mit dem Tragkörper oder der (zentralen) Drehachse gekoppelt, die abgetriebene Welle des stufenlosen Getriebes ist mit dem jeweils anderen Element (Tragkörper oder (zentrale) Drehachse) gekoppelt, und ein mit der Abstands-Verstellung eines oder mehrerer, peripherer Zahnräder gekoppeltes Steuerelement wird manuell oder durch eine elektronische Steuerung beeinflußt, um das gewünschte Übersetzungsverhältnis einzustellen. Damit läßt sich eine stufenlos verstellbare Übersetzung realisieren bei Übertragung größter Drehmomente auf kleinstem Raum und ohne Schlupf, wobei die Verstellung des Übersetzungsverhältnisses bei Volllast erfolgen kann, bei geeigneter Beschaltung, bspw. mittels eines nachgeschalteten Planetengetriebes, sogar unter Drehrichtungsumkehr der Abtriebswelle. Damit so läßt sich u.a. eine Zugmaschine realisieren, deren Motordrehzahl immer konstant gehalten werden kann, während Fahrgeschwindigkeit und -richtung ausschließlich mit dem erfindungsgemäßen Getriebe vorgegeben werden. Eine Kupplung ist nicht mehr erforderlich.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

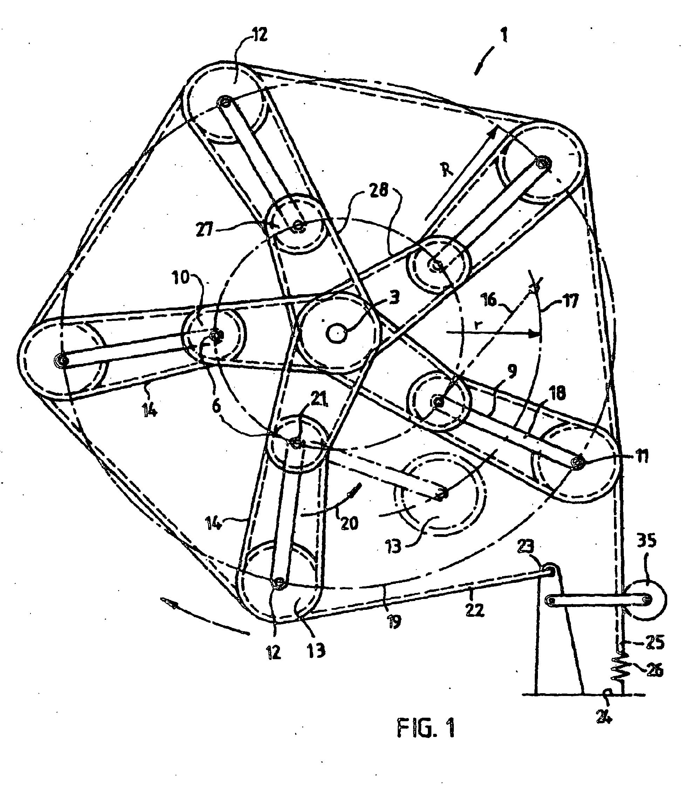

- Fig. 1: eine Vorderansicht eines erfindungsgemäßen Getriebes;

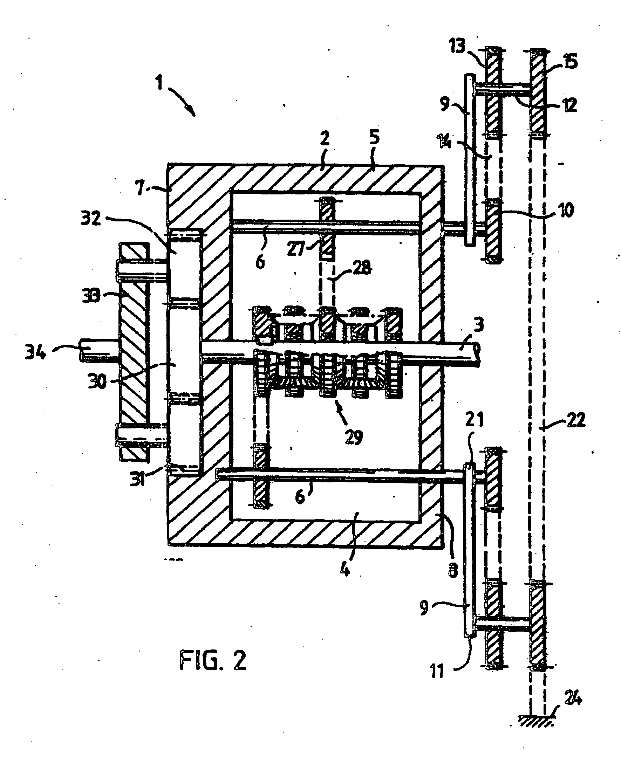

- Fig. 2: einen zu einer zentralen Drehachse koaxialen Längsschnitt durch das Getriebe aus Fig. 1; sowie
- Fig. 3: eine der Fig. 2 entsprechende Darstellung einer abgewandelten Ausführungsform der Erfindung.

Kernstück des erfindungsgemäßen Getriebes 1 ist ein Tragkörper 2, der im dargestellten Beispiel etwa die Gestalt eines Hohlzylinders hat. Dieser zylinderförmige Tragkörper 2 ist drehbar auf einem Drehkörper 3 in Form einer Achse gelagert, welche seinen inneren Hohlraum 4 koaxial zu seiner Mantelfläche 5 durchsetzt.

Der Hohlraum 4 wird im Bereich seiner Peripherie durchsetzt von mehreren, äquidistanten Drehachsen 6 mit achsparalleler Ausrichtung. Diese Drehachsen 6 sind in beiden Stirnseiten 7, 8 des Tragkörpers 2 gelagert und treten an einer Stinrseite 8 nach außen. Sie durchsetzen dort jeweils das innere Ende 21 je eines verschwenkbaren Hebels 9 und enden in der Nabe je eines Zahnrades 10, mit dem sie drehfest verbunden sind. An dem peripheren Ende 11 jedes Hebels 9 ist jeweils eine Welle 12 für ein weiteres Zahnrad 13 gelagert, das mittels einer geschlossenen Kette 14 drehfest mit dem Zahnrad 10 an dem inneren Ende des betreffenden Hebels 9 gekoppelt ist. Auf der Welle 12 ist außerdem jeweils ein weiteres Zahnrad 15 fixiert, das im folgenden als "peripheres Zahnrad" bezeichnet werden soll.

Durch gleichförmiges, synchrones Verschwenken aller Hebel 9 können die Wellen 12 von einem minimalen Radialabstand zu der zentralen Achse bis hin zu einem maximalen Radialabstand verstellt werden. Bei dem minimalen Abstand sind die Hebel 9 etwa in tangentialer Richtung 16 zu dem drehwellenförmigen Drehkörper 3 verstellt, die Wellen 12 der peripheren Zahnräder laufen auf einem Kreis 17 mit kleinem Radius r; bei maximalem Abstand weisen die Hebel 9 dagegen etwa in radialer Richtung 18 nach außen, die Wellen 12 bewegen sich auf einem großen Kreis 19 mit Radius R. Die Verstellung 20 kann bspw. dadurch bewirkt werden, dass ein weiteres - nicht dargestelltes - Zahnrad, welches ebenfalls auf dem Drehkörper 3 in Form einer Drehachse gelagert ist und mit einem verzahnten Bereich an den rückwärtigen bzw. radial innenliegenden Enden 21 der Hebel 9 kämmt, gegenüber dem Tragkörper 2 drehbewegungsmäßig (geringfügig) verstellt wird. Andere Mechanismen sind denkbar.

Die peripheren Zahnräder 15 werden außen umfangen von einer offenen Kette 22, die - wie auch die Zahnräder 15 - durch jeweils mehrere gleichartige Elemente in zueinander parallelen Ebenen gebildet sein kann, um die übertragbaren Kräfte zu vervielfachen.

Ein Ende 23 der Kette 22 ist an dem Gehäuse oder Chassis 24 des erfindungsgemäßen Getriebes 1 fixiert, das andere Ende 25 der Kette 22 ist ebenfalls, allerdings über Zwischenschaltung eines Spann- bzw. Federelements 26, mit dem Gehäuse bzw. Chassis 24 verbunden. Ein solches Spannmittel ist in der Lage, je nach Einstellung der Hebel 9 zwischen kleinem und großem Kreis 17, 19 eine Änderung der erforderlichen Kettenlänge um etwa I = 2 π (R - r) auszugleichen (wobei r der Radius eines Kreises 17 ist, auf dem die Wellen 12 der peripheren Zahnräder umlaufen, wenn die Hebel 9 etwa in tangentialer Richtung 16 zu dem drehwellenförmigen Drehkörper 3 verstellt sind, während R der Radius eines großen Kreises 19 ist, auf welchem sich die Wellen 12 bewegen, wenn die Hebel 9 etwa radial nach außen weisen), ohne dass die Kettenspannung unter einen unteren Grenzwert absinkt, damit der Zahneingriff zwischen Kette 22 und peripheren Zahnrädern 15 unabhängig von der Getriebeeinstellung stets gewährleistet ist.

Wenn der Tragkörper 2 um seine Drehachse mit einer Geschwindigkeit ω₁ rotiert wird, so rollen die peripheren Zahnräder 15 entlang der Kette 22 mit der Drehgeschwindigkeit ω₂ ab, wobei das Drehgeschwindigkeitsverhältnis ω₂/ω₁ von dem eingestellten Radius zwischen r und R abhängt, wobei r der Radius eines Kreises 17 ist, auf dem die Wellen 12 der peripheren Zahnräder umlaufen, wenn die Hebel 9 etwa in tangentialer Richtung 16 zu dem drehwellenförmigen Drehkörper 3 verstellt sind, während R der Radius eines großen Kreises 19 ist, auf welchem sich die Wellen 12 bewegen, wenn die Hebel 9 etwa radial nach außen weisen. Diese Drehbewegung wird über die Zahnräder 13, die Ketten 14 und die inneren Zahnräder 10 auf die den Hohlraum 4 durchsetzenden Drehachsen 6 übertragen. Innerhalb des Hohlraums 4 ist auf jeder Drehachse 6 ein weiteres Zahnrad 27 festgelegt, das über je eine weitere Kette 28 mit je einem Anschluß einer Differential-Baugruppe 29 verbunden ist, die konzentrisch auf dem wellenförmigen Drehkörper 3 angeordnet ist. In der Differential-Baugruppe 29 werden die Drehmomente von den unterschiedlichen Drehachsen 6 aufsummiert und auf den wellenförmigen Drehkörper 3 übertragen.

Bei der Differential-Baugruppe 29 kann es sich wie bei der dargestellten Ausführungsform um axial aneinandergereihte Zahnräder handeln, die über Zahnräder mit radial verlaufenden Achsen miteinander gekoppelt sind (Axialdifferential), oder um ein Radialdifferential mit radial aneinandergereihten Zahnrädern, insbesondere in Form eines abgewandelten Planetengetriebes, wobei die drei miteinander gekoppelten Einheiten dem Sonnenrad, dem Planetenradträger und dem Hohlrad eines solchen Planetengetriebes entsprechen. Gemeinsames Kriterium dieser Ausführungsform ist das Vorliegen eines synchronen Betriebs einerseits, wobei jeweils drei miteinander gekoppelte Zahnräder bzw. Einheiten mit der selben Geschwindigkeit rotieren (wenn gerade keine Getriebeverstellung erfolgt), und die Vorgabe definierter Verhältnisse hinsichtlich der Relativdrehzahlen beim Verstellen des erfindungsgemäßen Getriebes andererseits.

Der Drehkörper 3 in Form einer Drehwelle bildet bevorzugt die Abtriebswelle des Getriebes 1 und ist zu diesem Zweck durch die Ebene der Kette 22 hindurch nach außen verlängert. Am anderen Ende kann sie durch die gegenüberliegende Stirnseite 7 des Tragkörpers 2 ebenfalls hindurchgeführt sein und dort mit einem Sonnenrad 30 versehen sein, das sich konzentrisch innerhalb eines Hohlrades 31 dreht, welches an der Außenfläche der Stirnseite 7 des Tragkörpers 2 ausgebildet ist. In dem ringförmigen Zwischenraum zwischen Hohlrad 31 und Sonnenrad 30 kreisen mehrere Planetenräder 32, die an einem gemeinsamen Planetenradträger 33 gelagert sind. Dieser wiederum ist mit einer weiteren Drehachse 34 verbunden, die als An- oder Abtriebswelle dienen kann.

Ein solches Planetengetriebe ist optional, kann aber das erfindungsgemäße Getriebe 1 vorzugsweise insofern ergänzen, als dadurch der synchrone Betrieb bei einer gewünschten Drehzahl vorgegeben werden kann.

Die Anzahl der peripheren Zahnräder 15 kann je nach Konstruktion der Differential-Baugruppe 29 gerade oder ungerade sein. Beide Konfigurationen können vorteilhaft sein.

Alle peripheren Zahnräder 15 sind an dem Differential angeschlossen, von dem ein Anschluß mit dem Drehkörper 3 in Form einer Drehwelle gekoppelt ist. Dann gibt ein Paar von peripheren Zahnrädern 15, die beide mit der Kette 22 kämmen, über das Differential die Drehzahl des als Abtriebswelle dienenden Drehkörpers 3 vor und die Drehzahl des nicht mit der Kette 22 kämmenden Zahnrades 15, so dass sich keine undefinierten Drehzahlen ergeben und vielmehr das verbleibende Zahnrad 15 genau so gedreht wird, dass seine Zähne genau in fluchtenden Eingriff mit dem künftigen Ende 23, 25 der Kette 22 gelangen.

Wird das Getriebe 1 verstellt, so drehen sich alle peripheren Zahnräder 15 mit unterschiedlichen Geschwindigkeiten, weil sich die Abstände zwischen diesen Zahnrädern 15 verändern. Dies wird durch die Differentiale der Differential-Baugruppe 29 ausgeglichen, wobei eine etwa gleichmäßige Kraftaufteilung auf alle mit der Kette 22 kämmenden, peripheren Zahnräder 15 erhalten bleibt. Dadurch kann eine Verstellung 20 unter voller Last erfolgen. Die Kette 22 wird dabei mittels einer Rolle 35 geführt, so dass der "Öffnungswinkel", in welchem wenigstens ein Zahnrad 15 ohne Eingriff mit der Kette 22 ist, näherungsweise etwa konstant bleibt, vorzugsweise etwa bei 360° / n, wobei n die Anzahl der peripheren Zahnräder 15 ist.

Das Getriebe 1 könnte für spezielle Anwendungen auch in modifizierter Form betrieben werden. So wäre es bei Verwendung als stufenloses Getriebe in einem Fahrrad denkbar, den Drehkörper 3 in Form einer Achse und die wellenförmige Drehachse 34 als Einheit auszubilden und bspw. mit den Pedalen zu koppeln. Dadurch ist die Umfangsgeschwindigkeit der peripheren Zahnräder 15 um ihre eigenen Achsen blockiert bzw. null. Sie ändert sich nur während eines Getriebe-Verstellvorgangs. Durch Radialverstellung der peripheren Zahnräder 15 kann daher das Übersetzungsverhältnis verändert werden wie bei einem (großen) Zahnrad, dessen Durchmesser variiert wird. Die Kette, welche sich in diesem Fall über ein Abtriebszahnrad an der Hinterachse des Fahrrades schließt, überträgt demzufolge die entsprechend der Getriebeeinstellung variierende Umfangsgeschwindigkeit auf das Hinterrad.

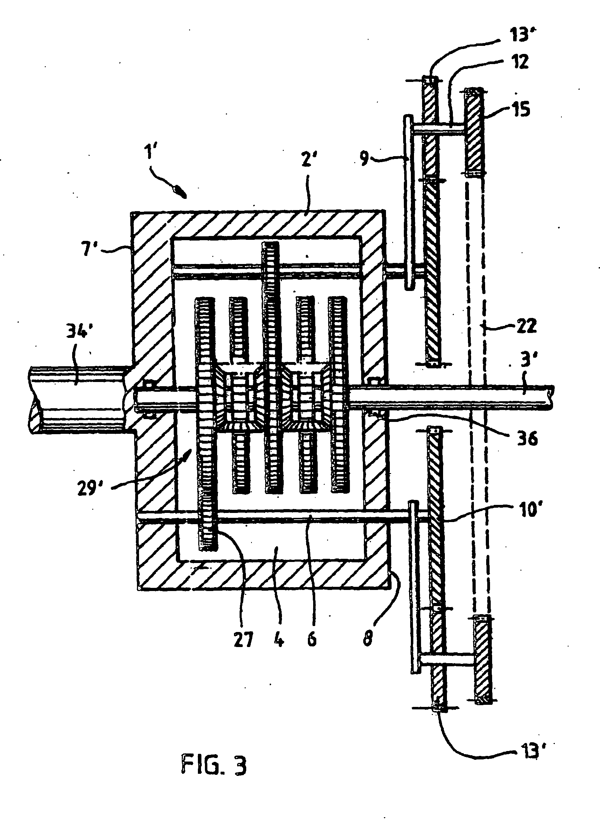

Bei dem Getriebe 1' gemäß Fig. 3 sind bei Standard-Anwendungen die Funktionen der antreibenden und getriebenen Wellen vertauscht: Die wellenförmige Drehachse 34' ist die antreibende Welle bzw. Eingangswelle, der wellenförmige Drehkörper 3' ist die getriebene Welle oder Ausgangswelle. Bspw, könnte bei Kraftfahrzeug-Anwendungen die wellenförmige Drehachse 34' der Motorwelle entsprechen, die Kette 22 könnte mit einer Radachse gekoppelt sein. Ggf. könnte bspw. bei einer solchen Anwendung auch ein Schaltgetriebe vor oder nachgeschalten sein, um den Drehzahl-Verstellbereich weiter auszudehnen.

Ansonsten unterscheidet sich dieses Getriebe 1' von dem oben beschriebenen u.a. dadurch, dass die inneren Zahnräder 10' und die an den peripheren Enden 11 der verschwenkbaren Hebel 9 drehbar gelagerten Zahnräder 13' so groß bemessen sind, dass die betreffenden Zahnräder 10', 13' eines Hebels 9 direkt miteinander kämmen und die Kette 14 dadurch entbehrlich wird. Dazu kann der Durchmesser des inneren Zahnrades 10' oder des äußeren Zahnrades 13' vergrößert sein oder beide; wichtig ist, dass sich jeweils ein Zahnrad 13' und ein Zahnrad 10' in ständigem Verzahnungseingriff befinden. Neben einer Drehzahlübersetzung ist auch eine Drehrichtungsumkehr die Folge.

Des weiteren sind auch die Zahnräder des Differentials 29' so groß, dass sie direkt mit je einem Zahnrad 27 auf einer Drehachse 6 kämmen und auch hier die Ketten 28 überflüssig werden. Abermals ist eine Veränderung der Übersetzung und eine Drehrichtungsumkehr die Folge. Durch die doppelte Drehrichtungsumkehr ist die Funktion dieses Getriebes 1' genauso wie die des Getriebes 1.

Bei dieser Ausführungsform wird auf ein Planetengetriebe verzichtet. Statt dessen ist die als Eingang dienende, wellenförmige Drehachse 34' direkt mit dem Tragkörper 2' drehfest und starr verbunden, und zwar an der Stirnseite 7' und koaxial zu dem als Ausgang dienenden, wellenförmgen Drehkörper 3'. Letzterer ist in diesem Fall nur mit dem Differential 29' drehfest gekoppelt, ansonsten in dem Tragkörper 2' drehbar gelagert (Lager 36). Dieses Getriebe 1' ist von seinem Aufbau her einfacher als das zuvor beschriebene, erzeugt aber die selbe Wirkung einer stufenlosen Drehzahlverstellung unter Last und ohne Schlupf, wobei sich bei entsprechender Wahl des Übersetzungsverhältnisses eine Drehrichtungsumkehr zwischen Ein- und Ausgangswelle realisieren läßt.

Bei einer Zwischenstellung (Nullstellung) steht die Ausgangswelle, während die Eingangswelle angetrieben ist. Dabei läuft die Ausgangswelle nicht frei, sondern ist blockiert; dadurch läßt sich ein Anfahren am Berg ohne Bremsbetätigung realisieren.

Da bei der in Fig. 3 dargestellten Ausführungsform eine Fixierung der Kette 22 an dem Gehäuse oder Chassis 24 des erfindungsgemäßen Getriebes 1' fehlt, kann die Kette 22 umlaufen.

## Patentansprüche

1. Stufenloses Getriebe (1;1') mit folgenden Elementen:
a) einem Tragkörper (2;2');
b) mehreren, peripheren Zahnrädern (15), die an dem Tragkörper (2;2') oder an damit mechanisch gekoppelten Elementen (9) derart gelagert sind, dass deren Drehachsen (12) parallel zueinander orientiert sind, wobei die Abstände zwischen den Drehachsen (12) der peripheren Zahnräder (15) derart verstellbar (20) sind, dass sie sich stets auf der Mantelfläche eines gedachten Zylinders befinden;
c) wenigstens einer die peripheren Zahnräder (15) außen umgebenden Reihe von Zahneingriffselementen (22), mit denen jeweils wenigstens eines der peripheren Zahnräder (15) kämmt;
d) einem Drehkörper (3;3'), vorzugsweise koaxial zu der Rotationsachse des gedachten Zylinders, der gegenüber dem Tragkörper (2;2') drehbar ist und dessen Drehbewegung mit der Drehbewegung der peripheren Zahnräder (15) gekoppelt ist;
e) einer Antriebswelle, die mit dem Tragkörper (2;2') oder mit dem Drehkörper (3;3') gekoppelt ist;
f) einer Abtriebswelle, die mit dem jeweils anderen Element, nämlich mit dem Drehkörper (3;3') oder mit dem Tragkörper (2;2') gekoppelt ist;
g) einem Steuerelement zur Einstellung des Übersetzungsverhältnisses des stufenlosen Getriebes (1;1'), das mit der Abstands-Verstellung (20) eines oder mehrerer, peripherer Zahnräder (15) gekoppelt ist;
**dadurch gekennzeichnet, dass**
h) die Dreh-Kopplung zwischen den peripheren Zahnrädern (15) und dem Drehkörper (3;3') mittels eines oder mehrerer Differentiale (29;29'), d.h. Ausgleichs- oder Differentialgetriebe, erfolgt, so dass eine asynchrone Drehung der peripheren Zahnräder (15) möglich ist.

2. Stufenloses Getriebe nach Anspruch 1, **dadurch gekennzeichnet, dass** an dem Tragkörper (2;2') Einrichtungen vorgesehen sind, um den Abstand der peripheren Zahnräder (15) gegeneinander bzw. in Bezug auf eine zentrale Achse eines gedachten Zylinders zu verstellen.

3. Stufenloses Getriebe nach Anspruch 2, **dadurch gekennzeichnet, dass** mehrere Einrichtungen zur Verstellung des Abstands der peripheren Zahnräder (15) gegeneinander bzw. in Bezug auf eine zentrale Achse eines gedachten Zylinders miteinander gekoppelt sind, so dass die Abstands-Verstellung (20) aller peripheren Zahnräder (15) gleichermaßen erfolgt.

4. Stufenloses Getriebe nach einem der vorhergehenden Ansprüche, **dadurch gekennzeichnet, dass** wenigstens eine die peripheren Zahnräder (15) außen umgebende Reihe von Zahneingriffselementen flexibel und/oder verstelbar ist, so dass der Eingriff mit wenigstens einem peripheren Zahnrad (15) unabhängig von dessen aktueller Abstands-Einstellung (16-18) gewährleistet ist.

5. Stufenloses Getriebe nach einem der vorhergehenden Ansprüche, **dadurch gekennzeichnet, dass** wenigstens eine die peripheren Zahnräder (15) außen umgebende Reihe von Zahneingriffselementen in Richtung an die peripheren Zahnräder heran vorgespannnt (26) ist, um den Eingriff mit wenigstens einem peripheren Zahnrad (15) unabhängig von dessen aktueller Abstands-Einstellung (16,18) sicherzustellen.

6. Stufenloses Getriebe nach einem der vorhergehenden Ansprüche, **dadurch gekennzeichnet, dass** wenigstens eine die peripheren Zahnräder (15) außen umgebende Reihe von Zahneingriffselementen durch eine Kette (22) gebildet ist, deren Glieder mit den Zähnen wenigstens zweier peripherer Zahnräder (15) kämmen.

7. Stufenloses Getriebe nach Anspruch 6, **dadurch gekennzeichnet, dass** die mit wenigstens einem peripheren Zahnrad (15) kämmende Kette (22) ein Spannelement (26) aufweist oder mit einem Spannelement (26) gekoppelt ist, welches eine Zugspannung zwischen den Kettengliedern erzeugt.

8. Stufenloses Getriebe nach einem der vorhergehenden Ansprüche, **dadurch gekennzeichnet, dass** zwischen Tragkörper (2;2') und Drehkörper (3;3') eine Drehlagerung (36) angeordnet ist.

9. Stufenloses Getriebe nach einem der vorhergehenden Ansprüche, **dadurch gekennzeichnet, dass** ein oder mehrere Differentiale (29;29') sich an dem Drehkörper (3;3'), insbesondere auf einer zentralen Drehachse, befinden.

10. Stufenloses Getriebe nach einem der vorhergehenden Ansprüche, **dadurch gekennzeichnet, dass** mehrere Differentiale (29;29') oder Differential-Einheiten in Richtung der Rotationsachse des Drehkörpers (3;3') hintereinander angeordnet und miteinander gekoppelt sind.

11. Stufenloses Getriebe nach einem der vorhergehenden Ansprüche, **dadurch gekennzeichnet, dass** ein mit der Abstands-Verstellung (20) eines oder mehrerer, peripherer Zahnräder (15) gekoppeltes Steuerelement manuell oder durch eine elektronische Steuerung beeinflußbar ist, um das gewünschte Übersetzungsverhältnis einzustellen.

12. Verwendung des stufenloses Getriebes (1;1') nach einem der vorhergehenden Ansprüche in Personen- und/oder Lastkraftfahrzeugen, landwirtschaftlichen Maschinen und/oder Fahrzeugen, Baumaschinen und/oder -fahrzeugen, Fördermaschinen und/oder -fahrzeugen, Aufzügen, Kraft- und Fahrrädern.

## Claims

1. Infinitely variable transmission (1;1') with
a) one support body (2;2');
b) several peripheral gears (15) mounted on the support body (2;2') or on elements mechanically coupled to it (9) in such a way that the rotating shafts (12) thereof are oriented parallel to each other, with the distances between the rotational shafts (12) of the peripheral gears (15) being adjustable (20) so as to always be located on the outer surface of an imaginary cylinder;
c) at least one row of tooth-engaging elements which surround the peripheral gears (15) on the outside, with which at least one of the peripheral gears (15) engages;
d) a rotational body (3;3'), preferably coaxial to the axis of rotation of the imaginary cylinder, which is rotatable relative to the support body (2;2') and whose rotary movement is coupled to the rotary movement of the peripheral gears (15);
e) a drive shaft, which is coupled to the support body (2;2') or to the rotational body (3;3');
f) an output shaft, which is coupled always to the other element, namely to the rotational body (3;3') or to the support body (2;2');
g) a control element for adjustment of the transmission ratio of the infinitely variable transmission (1;1'), which is coupled to the distance adjustment of one or more, peripheral gears (15);
**characterised in that**
h) the rotational coupling between the peripheral gears (15) and the rotational body (3;3') is effected by means of one or more differentials (29;29'), i.e. compensation or differential gears, so that an asynchronous rotation of the peripheral gears (15) is possible.

2. Infinitely variable transmission according to claim 1, **characterised in that** devices ar3e provided for on the support body (2;2') to adjust the distance between the peripheral gears (15) themselves or between the peripheral gears and the central axis of an imaginary cylinder.

3. Infinitely variable transmission according to claim 2, **characterised in that** several mechanisms for adjustment of the distance of the peripheral gears (15) relative to each other or relative to a central axis of an imaginary cylinder, respectively, are coupled to each other, so that the distance adjustment (20) of all peripheral gears (15) is effected uniformly.

4. Infinitely variable transmission according to one of the previous claims, **characterised in that** at least one row of tooth-engaging elements surrounding the peripheral gears (15) on the outside is flexible and/or adjustable, so that engagement with at least one peripheral gear (15) is guaranteed, regardless of its current distance setting (16,18).

5. infinitely variable transmission according to one of the previous claims, **characterised in that** at least one row of tooth-engaging elements surrounding the peripheral gears (15) on the outside is pretensioned (26) in the direction of the peripheral gears so that engagement with at least one peripheral gear (15) is guaranteed, regardless of its current distance setting (16,18).

6. Infinitely variable transmission according to one of the precious claims, **characterised in that** at least one row of tooth-engaging elements surrounding the peripheral gears (15) on the outside is formed by a chain (22) whose links engage with the teeth of at least two of the peripheral gears (15).

7. Infinitely variable transmission according to claim 6, **characterised in that** the chain (22) engaging with at least one peripheral gear (15) has a tensioning element (26) or is coupled to a tensioning element (26) which generates tensile stress between the links of the chain.

8. Infinitely variable transmission according to one of the previous claims, **characterised in that** a pivot bearing (36) is located between the support body (2;2') and the rotational body (3;3').

9. Infinitely variable transmission according to one of the previous claims, **characterised in that** one or more differentials (29;29') are located on the rotational body (3;3'), in particular on a central rotating shaft.

10. Infinitely variable transmission according to one of the previous claims, **characterised in that** several differentials (29;29') or differential units are arranged one after the other in the direction of the axis of rotation of the rotational body (3;3') and coupled to each other.

11. Infinitely variable transmission according to one of the previous claims, **characterised in that** a control element coupled to the distance adjusting mechanism (20) of one or more peripheral gears (15) is influenceable manually or with the aid of an electronic controller in order to adjust the desired transmission ratio.

12. Use of the infinitely variable transmission (1;1') according to one of the previous claims in passenger cars and/or trucks, agricultural implements and/or vehicles, construction engines and/or vehicles, conveying machines and/or vehicles, elevators, motorbikes and bicycles etc.

## Revendications

1. Transmission à réglage continu (1 ; 1) avec les éléments suivants
a) un corps porteur (2 ; 2') ;
b) plusieurs engrenages périphériques (15), qui sont logés sur le corps porteur (2 ; 2') ou sur les éléments (9) qui y sont accouplés mécaniquement de façon telle que leurs axes de rotation (12) sont orientés parallèlement les uns par rapport aux autres, où les écartements entre les axes de rotation (12) des engrenages périphériques (15) sont réglables (20) de façon telle qu'ils se trouvent toujours sur la surface de l'enveloppe d'un cylindre conçu à cet effet ;
c) au moins une rangée d'éléments d'engrènement des dents (22) entourant extérieurement les engrenage périphériques (15) avec lesquels s'engrène respectivement au moins un des engrenages périhériques (15);
d) un corps rotatif (3 ; 3), de préférence coaxial par rapport à l'axe de rotation du cylindre conçu à cet effet, qui est monté à rotation par rapport au corps porteur (2 ; 2') et dont le mouvement de rotation est couplé au mouvement de rotation des engrenages périphériques (15) ;
e) un arbre d'entraînement qui est couplé au corps porteur (2 ; 2') ou au corps rotatif (3 ; 3') ;
f) un arbre de sortie qui est couplé respectivement à l'autre élément, à savoir au corps rotatif (3 ; 3') ou au corps porteur (2 ; 2') ;
g) un élément de commande pour le réglage du rapport de transmission de la transmission à réglage continu (1 ; 1') qui es couplé au réglage de l' écartement (20) d'un ou de plusieurs engrenages périphériques (15) ;
**caractérisée en ce que**
h) le couplage rotatif entre les engrenages périphériques (15) et le corps rotatif (3 ; 3') est effectué au moyen d'une ou de plusieurs différentielles (29 ; 29'), c.-à-d, un engrenage compensateur ou différentiel, de façon qu'une rotation asynchrone des engrenages périphériques (15) soit possible.

2. Transmission à réglage continu selon la revendication 1, **caractérisée en ce que** des dispositifs sont prévus sur le corps porteur (2 ; 2') pour régler l'écartement des engrenages périphériques (15) en sens opposé ou par rapport à un axe central d'un cylindre conçu à cet effet.

3. Transmission à réglage continu selon la revendication 2, **caractérisée en ce que** plusieurs dispositifs destinés au réglage de l'écartement des engrenages périphériques (15) en sens opposé ou par rapport à un axe central d'un cylindre conçu à cet effet sont couplés entre eux de façon que le réglage de l'écartement (20) de tous les engrenages périphériques (15) s'effectue de la même manière.

4. Transmission à réglage continu selon l'une des revendications précédentes, **caractérisée en ce qu'**au moins une rangée d'éléments d'engrènement des dents entourant extérieurement les engrenages périphériques (15) est variable et/ou réglable de façon que l'engrènement soit assuré avec au moins un engrenage périphérique (15), indépendamment de son réglage d'écartement momentané (16, 18).

5. Transmission à régalage continu selon l'une des revendications précédentes, **caractérisée en ce qu'**au moins une rangée d'éléments d'engrènement des dents entourant extérieurement les engrenages périphériques (15) est prépositionnée (26) en direction des engrenages périphériques pour assurer l'engrènement avec au moins un engrenage périphérique (15), indépendamment de son réglage d'écartement momentané (16, 18).

6. Transmission à réglage continu selon l'une des revendications précédentes, **caractérisée en ce qu'**au moins une rangée d'éléments d'engrènement des dents entourant extérieurement les engrenages périphériques (15) est réalisée par une chaîne (22) dont les maillons s'engrènent avec les dents d'au moins deux engrenages périphériques (15).

7. Transmission à réglage- continu selon la revendication 6, **caractérisée en ce que** la chaîne (22) s'engrenant avec au moins un engrenage périphérique (15) présente un élément de serrage (26) ou est couplée à un élément de serrage (26), lequel engendre un effort de traction entre les maillons de la chaîne.

8. Transmission à réglage continu selon l'une des revendications précédentes, **caractérisée en ce qu'**un palier rotatif (36) est placé entre le corps porteur (2 ; 2') et le corps rotatif (3 ; 3').

9. Transmission à réglage continu selon l'une des revendications précédentes, **caractérisée en ce qu'**une ou plusieurs différentielles (29; 29') se trouvent sur le corps rotatif (3; 3'), en particulier sur un axe de rotation central.

10. Transmission à réglage continu selon l'une des revendications précédentes,
**caractérisée en ce que** plusieurs différentielles (29 ; 29') ou unités différentielles sont placées l'une derrière l'autre et couplées entre elles en direction de l'axe de rotation du corps rotatif (3 ; 3').

11. Transmission à réglage continu selon l'une des revendications **caractérisée en ce qu'**un élément de commande couplé au réglage de l'écartement (20) d'un ou de plusieurs engrenages périphériques (15) peut être influencé manuellement ou par une commande électronique pour régler le rapport de transmission souhaité.

12. Utilisation de la transmission à réglage continu (1 ; 1') selon l'une des revendications précédentes dans des véhicules de tourisme et/ou utilitaires, des machines et/ou des véhicules agricoles, des machines et/ou engins de chantier, des machines et/ou engins d'extraction, des monte-charges et/ou ascenseurs, des vélomoteurs et des bicyclettes.
